# FASCICULE DE BREVET EUROPEEN

(11) **EP 0 430 785 B1**
(45) Date de publication et mention de la délivrance du brevet: **28.08.1996**
(21) Numéro de dépôt: 90403331.3
(22) Date de dépôt: 23.11.1990
(51) Int. Cl.: C08F 22/40, C08F 297/02, C08F 4/48

(54) **Polymères comportant des motifs dérivés de maléimides, à résistance à la chaleur améliorée**
Polymere mit verbesserter Wärmebeständigkeit enthaltend Maleimidderivateinheiten
Polymers with improved heat resistance containing maleimide derivative units

(30) Priorité: 27.11.1989 FR 8915581
(43) Date de publication de la demande: 05.06.1991
(73) Titulaire: ELF ATOCHEM S.A., F-92800 Puteaux (FR)
(72) Inventeur: Varshney, Sunil K., B-4030 Liège (BE); Teyssie, Philippe, B-4121 Neuville-en-Condroz (BE); Fayt, Roger, B-4121 Neupre (BE)
(74) Mandataire: Chaillot, Geneviève

(56) Documents cités:
- CHEMICAL ABSTRACTS, vol. 77, no. 4, 1972, page 11, résumé no. 20159b, Columbus, Ohio, US; M. YAMADA et al.: "Anionic polymerization of N-phenylmaleimide and its N-4-substituted derivatives"

## Description

La présente invention se rapporte à de nouveaux polymères possédant une résistance à la chaleur améliorée, et, en particulier, à de nouveaux polymères comportant des motifs dérivés de maléimides.

La polymérisation par voie radicalaire et anionique de maléimides N-substitués a déjà été étudiée. Ainsi, R. CUBBON, Polymer 6, 419 (1965) a mis en évidence l'obtention de polymères possédant une configuration à prédominance thréo di isotactique en polymérisant le n-éthylmaléimide au moyen de n-butyllithium comme initiateur:
- soit dans le toluène, à des températures ne dépassant pas -20°C, pendant des durées allant de 20 minutes à 3 heures, conduisant à un rendement ne dépassant pas 22%,
- soit dans le tétrahydrofuranne, à -70°C, conduisant rapidement à un rendement allant jusqu'à 95%.

Concernant le N-phénylmaléimide, T. HAGIWARA et al., Makromol. Chem., Rapid Commun. 6, 169 (1985) a décrit l'influence du choix de l'initiateur et des conditions réactionnelles sur la polymérisation anionique, a confirmé les observations de R. CUBBON et montré que:
- des rendements dépassant 85% sont obtenus dans le tétrahydrofuranne entre -72°C et 0°C pour des durées de réaction de 30 à 60 minutes en présence de tert.-butanolate de potassium. La masse moléculaire moyenne en nombre du polymère obtenu peut atteindre jusqu'à 8000 pour une durée de réaction de 3 heures à -72°C.
- un rendement quantitatif en présence d'une forte proportion de tert.-butanolate de lithium peut être obtenu à 0°C dans le tétrahydrofuranne, le polymère résultant possédant une masse moléculaire moyenne en nombre de 2000 seulement.

Les observations précédentes ont encore été confirmées dans le cas du N-éthylmaléimide par T. HAGIWARA et al. dans J. Polym. Sci., Polym. Chem. Ed. 26, 1011 (1988). Aux enseignements précédents, cette publication a toutefois ajouté la possibilité d'excellents rendements de polymérisation à+24°C en présence de tert.-butanolate de potassium aussi bien dans le toluène que dans le tétrahydrofuranne, ainsi que le caractère vivant du processus réactionnel permettant d'obtenir une masse moléculaire moyenne en nombre atteignant 6400.

De l'enseignement de l'art antérieur rappelé ci-dessus, on retiendra globalement que, d'une part, la polymérisation par voie anionique des maléimides N-substitués produit des résultats très différenciés selon la nature, alkyle ou aryle, de la N-substitution et, à une exception près, selon la nature du solvant utilisé, et que, d'autre part, aucun moyen n'a été proposé jusqu'à ce jour permettant d'obtenir des polymères de masse moléculaire élevée (le degré de polymérisation accessible paraissant limité à 50 environ). De la première observation, il résulte le besoin, pour l'obtention de polymères possédant une répartition contrôlée, et de préférence étroite, des poids moléculaires, d'une synthèse dans des conditions de sécurité industrielle. De la seconde observation, il résulte une difficulté à trouver des usages industriels à des polymères de masse moléculaire trop faible.

Le double problème que la présente invention se propose de résoudre consiste donc :
- d'une part, à proposer des moyens pour synthétiser, dans de bonnes conditions de rendement, des polymères de maléimides N-substitués possédant une distribution étroite des masses moléculaires, et
- d'autre part, à synthétiser de nouveaux polymères comportant des motifs dérivés de maléimides possédant des caractéristiques intrinsèques correspondant à de vrais usages industriels, et notamment des polymères de haut poids moléculaire.

Les techniques décrites ci-après permettent de résoudre au moins l'un des deux problèmes précités. En particulier, il a été trouvé de manière inattendue que des séquences polymères de haut poids moléculaire à base de maléimide N-substitué peuvent être obtenues à condition de procéder à la sélection de certains initiateurs de polymérisation anionique non utilisés jusqu'ici pour ce type de monomères. Ainsi, une sélection judicieuse de ces initiateurs permet d'atteindre des séquences polymères de poids moléculaire au moins égal à 12000, c'est-à-dire supérieur de moitié au poids moléculaire le plus élevé connu jusqu'ici, et pouvant aller jusqu'à 100000 environ. D'autre part, il a été trouvé que, quel que soit l'initiateur de polymérisation anionique utilisé et donc quel que soit le poids moléculaire du polymère à base de maléimide N-substitué, une distribution étroite des masses moléculaires peut être obtenue en ajoutant à l'initiateur de polymérisation un composé choisi parmi les sels minéraux et les sels organiques de métaux alcalins ou alcalino-terreux. L'addition d'un tel composé permet généralement d'abaisser la polydispersité de la séquence polymère à base de maléimide N-substitué jusqu'à une valeur allant de 1,1 à 1,5 environ, alors qu'en l'absence de cet additif la polydispersité dépasse couramment 1,7. Comme cela est bien connu des spécialistes en polymérisation anionique, une telle différence de polydispersité a le plus souvent des conséquences avantageuses sur les caractéristiques des produits pouvant être préparés à partir de ces polymères. En dernier lieu, il a été trouvé qu'il est possible d'associer de manière avantageuse des séquences polymères à base de maléimide N-substitué, le cas échéant de haut poids moléculaire et/ou de faible dispersité comme décrit ci-dessus, à des séquences polymères à base de monomères acryliques ou méthacryliques, par exemple sous forme de copolymères biséquencés ou triséquencés.

Un premier objet de la présente invention consiste donc en un procédé de polymérisation anionique d'un maléimide N-substitué dans un solvant et en présence d'au moins un amorceur organométallique de métal alcalin, caractérisé en ce que, comme amorceur de polymérisation, on utilise un composé choisi parmi le sec-butyllithium, le tert.-butanolate de sodium, le diphénylméthyl potassium, le naphtalène lithium et le naphtalène sodium. Comme indiqué précédemment, le principal effet du procédé selon l'invention réside dans l'élévation du poids moléculaire du polymère qu'il rend possible. En effet, le procédé selon l'invention permet de préparer des séquences polymères à base de maléimide N-substitué possédant un poids moléculaire au moins égal à 12 000 et pouvant atteindre jusqu'à 100 000 environ, alors que des initiateurs connus de polymérisation anionique tels que, soit ceux déjà envisagés dans le contexte des maléimides (n-butyllithium, tert.-butanolate de potassium, tert.-butanolate de lithium), soit d'autres comme le cumylpotassium, le tert.-butyllithium, l'alpha-méthylstyryllithium se sont révélés incapables de préparer des polymaléimides N-substitués de poids moléculaire dépassant 8000.

Pour la description du procédé selon l'invention comme dans la suite de la présente demande de brevet, par maléimide N-substitué, on entend une molécule de formule : 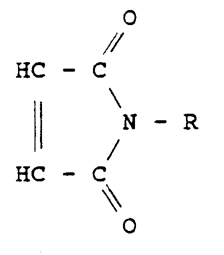 dans laquelle R est un radical alkyle, arylalkyle, aryle ou alkylaryle ayant de 1 à 12 atomes de carbone. Des exemples de telles molécules sont notamment le N-éthylmaléimide, le N-isopropylmaléimide, le N-n-butylmaléimide, le N-isobutylmaléimide, le N-terbutylmaléimide, le N-n-octylmaléimide, le N-cyclohexylmaléimide, le N-benzylmaléimide et le N-phénylmaléimide.

Dans le procédé suivant l'invention, le solvant est choisi, de préférence, parmi les solvants aromatiques, tels que le benzène et le toluène, ou bien le tétrahydrofuranne, le diglyme, le tétraglyme, l'orthoterphényle, le biphényle, la décaline, la tétraline ou le diméthylformamide ou leurs mélanges et la température varie de préférence entre -78°C et +20°C environ.

Un second objet de la présente invention consiste en un procédé de préparation de polymère à base de maléimide N-substitué possédant une distribution étroite des masses moléculaires par polymérisation anionique dudit maléimide dans un solvant et en présence d'un système initiateur constitué d'au moins un amorceur organométallique de métal alcalin et d'au moins un composé choisi parmi les sels minéraux et les sels organiques de métaux alcalins ou alcalino-terreux. Parmi les amorceurs organométalliques utilisables dans ce procédé, on peut citer, outre ceux évoqués à l'occasion du premier objet de l'invention, des composés tels que le diphénylméthyllithium, le diphénylméthylsodium, le 1,4-dilithio-1,1,4,4-tétraphénylbutane et le 1,4-disodio-1,1,4,4-tétraphénylbutane.

Le composé ajouté à l'amorceur organométallique est choisi parmi, d'une part, les sels minéraux de métaux alcalins ou alcalino-terreux par exemple, les chlorures, fluorures, bromures, iodures, borures, sulfates, nitrates et borates, et, d'autre part, les sels organiques de métaux alcalins, par exemple, les alcoolates, les esters d'acides carboxyliques substitués en position alpha par ledit métal et les composés dans lesquels ledit métal alcalin est associé à un groupe tel que :
(A) les groupes de formule : 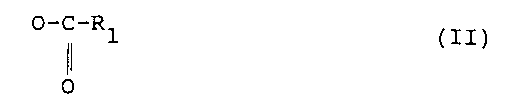 dans laquelle R₁ est un radical alkyle linéaire ou ramifié possédant de 1 à 20 atomes de carbone, ou bien un radical cycloalkyle possédant de 3 à 20 atomes de carbone, ou encore un radical aryle possédant de 6 à 14 atomes de carbone,
(B) les groupes de formule : 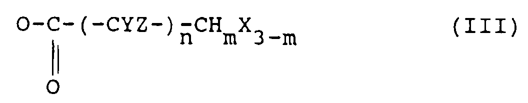 dans laquelle :
   - Y et Z, identiques ou différents l'un de l'autre, sont choisis parmi l'atome d'hydrogène et les atomes d'halogène ;
   - n est un nombre entier allant de 0 à 4,
   - X est un atome d'halogène, et
   - m est un nombre entier allant de 0 à 2,
(C) les groupes de formule :

   O-SO₂-CT₃ (IV)

   dans laquelle T est choisi parmi l'atome d'hydrogène et les atomes d'halogène, et
(D) les groupes de formule :

   B(R₂)₄ (V)

   dans laquelle R₂ est choisi parmi l'atome d'hydrogène et les radicaux alkyle et aryle.

Des exemples de groupes de formule (II) sont les groupes acétate, propionate et benzoate. Des exemples de groupes de formule (III) sont les groupes alpha-bromoacétate et trifluoroacétate. Des exemples de groupes de formule (IV) sont les groupes trifluorométhane sulfonique et méthanesulfonique. Des exemples de groupes (V) sont les groupes borohydrure et tétraphénylborure.

Dans ce second procédé selon l'invention, le solvant est choisi, de préférence, parmi les solvants aromatiques, tels que le benzène et le toluène, ou bien le tétrahydrofuranne, le diglyme, le tétraglyme, l'orthoterphényle, le biphényle, la décaline, la tétraline ou le diméthylformamide ou leurs mélanges et la température varie de préférence entre -78°C et +20°C environ. Bien évidemment, lorsque l'amorceur de polymérisation est choisi parmi le sec-butyllithium, le tert. butanolate de sodium, le diphénylméthylpotassium, le naphtalène sodium et le naphtalène lithium, les traits caractéristiques de deux procédés déjà décrits peuvent être combinés, ce qui permet d'atteindre des polymères à base de maléimide N-substitué possédant à la fois une masse moléculaire moyenne en nombre élevée et une distribution étroite des masses moléculaires.

Un troisième objet de la présente invention consiste en un copolymère multiséquencé dans lequel au moins une séquence polymère à base de maléimide N-substitué est associée à au moins une séquence polymère à base de monomère acrylique ou méthacrylique, à l'exclusion des copolymères triséquencés ayant un poids moléculaire moyen en nombre allant de 3000 à 300 000 et une polydispersité des poids moléculaires allant de 1,05 à 2,0, et ayant au moins une séquence extrème à base de maléimide N-substitué.

Par monomère acrylique au sens de la présente invention, on entend un monomère choisi parmi les acrylates d'alkyle primaire, secondaire ou tertiaire dont le groupe alkyle, le cas échéant substitué par exemple par au moins un atome d'halogène, tel que le chlore ou fluor, et/ou au moins un groupe hydroxyle, contient de 1 à 18 atomes de carbone, en mentionnant plus particulièrement, l'acrylate d'éthyle, l'acrylate de propyle, l'acrylate d'isopropyle, l'acrylate de butyle, l'acrylate d'isobutyle, l'acrylate d'hexyle, l'acrylate de tertiobutyle, l'acrylate d'éthyl-2 hexyle, l'acrylate de nonyle, l'acrylate de lauryle, l'acrylate de stéaryle, l'acrylate de cyclohexyle, l'acrylate d'isodécyle, ainsi que l'acrylate de phényle, l'acrylate d'isobornyle, les acrylates d'alkylthioalkyle ou d'alcoxyalkyle, l'acrylonitrile et les dialkylacrylamides.

Par monomère méthacrylique au sens de la présente invention, on entend un monomère choisi parmi les méthacrylates d'alkyle dont le radical alkyle, le cas échéant substitué, par exemple par au moins un atome d'halogène comme le chlore ou le fluor et/ou au moins un groupe hydroxyle, contient 1 à 18 atomes de carbone, comme les méthacrylates de méthyle, d'éthyle, de 2,2,2-trifluoroéthyle, de n-propyle, d'isopropyle, de n-butyle, de sec.-butyle, de tert.-butyle, de n-amyle, d'i-amyle, d'hexyle, d'éthyl-2 hexyle, de cyclohexyle, d'octyle, d'i-octyle, de décyle, de bêta-hydroxy-éthyle, d'hydroxypropyle, d'hydroxybutyle, ainsi que le méthacrylate de glycidyle, le méthacrylate de norbornyle, le méthacrylonitrile et les dialkylméthacrylamides.

Les copolymères multiséquencés selon l'invention peuvent être notamment des copolymères biséquencés dans lesquels une séquence à base de maléimide N-substitué est associée à une séquence à base de monomère acrylique ou méthacrylique. Ce peuvent être aussi des copolymères triséquencés dans lesquels une séquence centrale à base de maléimide N-substitué est associée à deux séquences extrêmes à base de monomère acrylique ou méthacrylique. Bien évidemment, si la séquence à base maléide de maléimide N-substitué a été préparée conformément au premier objet de la présente invention, le copolymère multiséquencé résultant comportera une séquence à motifs dérivés dudit maléimide possédant un poids moléculaire élevé, par exemple au moins égal à 12 000 et pouvant atteindre jusqu'à 100 000 environ. De même, si la séquence à base de maléimide N-substitué a été préparée conformément au second objet de la présente invention, le copolymère multiséquencé résultant comportera une séquence à motifs dérivés de ladite maléimide possédant une faible polydispersité des masses moléculaires, par exemple une polydispersité allant de 1,1 à 1,5 environ.

Dans les copolymères multiséquencés selon l'invention, le poids moléculaire moyen de la séquence à base de monomère acrylique ou méthacrylique peut varier dans de larges limites, allant notamment de 2000 à 100 000 environ. Cette séquence peut elle-même posséder une faible polydispersité des masses moléculaires si elle a été préparée en présence d'au moins un composé choisi parmi les sels minéraux et les sels organiques de métaux alcalins ou alcalino-terreux tels que décrits précédemment.

Selon une variante de la présente invention, les blocs représentant une séquence d'un monomère acrylique et/ou méthacrylique, tel que précédemment défini, peuvent être hydrolysés en une séquence de l'acide acrylique et/ou méthacrylique correspondant et ladite séquence peut le cas échéant être ultérieurement saponifiée en une séquence de l'acrylate et/ou du méthacrylate alcalin correspondant. Selon une autre variante de la présente invention, les blocs représentant une séquence d'un monomère acrylique et/ou méthacrylique, tel que précédemment défini, peuvent être transestérifiés en une séquence d'un autre monomère acrylique et/ou méthacrylique, par exemple de façon à remplacer un acrylate tertiaire ou secondaire par un acrylate primaire.

La présente invention a également pour objet un procédé de fabrication d'un copolymère biséquencé dans lequel une séquence polymère à base de maléimide N-substitué est associée à une séquence polymère à base de monomère acrylique ou méthacrylique ou d'un copolymère triséquencé dont la séquence centrale à base de maléimide N-substitué est associée à deux séquences extrêmes à base de monomère acrylique ou méthacrylique, consistant à :
(1) conduire la polymérisation anionique d'au moins un monomère acrylique ou méthacrylique à l'aide d'un amorceur monofonctionnel et, le cas échéant, en présence d'au moins un composé choisi parmi les sels minéraux et les sels organiques de métaux alcalins ou alcalino-terreux et les complexants macrocycliques non azotés, de manière à obtenir un chaînon vivant de la séquence polymère à base de monomère acrylique ou méthacrylique ; puis
(2) faire réagir ledit chaînon vivant ainsi obtenu avec au moins une maléimide N-substitué de manière à obtenir un copolymère biséquencé vivant susceptible de réagir à son tour avec au moins un monomère acrylique ou méthacrylique pour former un copolymère triséquencé.

L'amorceur monofonctionnel utilisable dans ce procédé peut être un composé de formule :

(R)ₚ-M (I)

dans laquelle :
- M désigne un métal alcalin ou alcalino-terreux (valence p de 1 ou 2) ; et
- R désigne un radical alkyle à chaîne droite ou ramifiée contenant 2 à 6 atomes de carbone, ou un radical alkyle contenant 1 à 6 atomes de carbone substitué par au moins un groupe phényle.
Des exemples de tels composés sont notamment le sec.-butyllithium, le n-butyllithium et l'alphaméthylstyryllithium, le 1,1-diphénylhexyllithium, le diphénylméthyllithium ou sodium ou potassium et le 1,1-diphényl-3-méthyl phényllithium. L'amorceur monofonctionnel peut également être un alcoolate alcalin.

La présente invention porte également sur un procédé de fabrication d'un copolymère triséquencé dans lequel une séquence centrale à base de monomère acrylique ou méthacrylique est associée à deux séquences extrêmes à base de maléimide N-substitué, consistant à :
(1) conduire la polymérisation anionique d'au moins un monomère acrylique ou méthacrylique à l'aide d'un amorceur bifonctionnel et, le cas échéant, en présence d'au moins un composé choisi parmi les sels minéraux et les sels organiques de métaux alcalins ou alcalino-terreux et les complexants macrocycliques non azotés, de manière à obtenir un dianion de la séquence polymère à base de monomère acrylique ou méthacrylique, puis
(2) faire réagir ledit dianion avec au moins un maléimide N-substitué.

Des exemples d'amorceurs bifonctionnels utilisables dans ce procédé sont notamment le 1,4-dilithio-1,1,4,4-tétraphénylbutane, le 1,4-disodio 1,1,4,4-tétraphénylbutane, le naphtalène sodium et le naphtalène lithium.

Comme dans le procédé second objet de la présente invention, la quantité du composé éventuellement présent au cours de la synthèse des copolymères multiséquencés peut varie fortement par rapport à l'amorceur. Cette quantité peut être, par exemple, largement excédentaire par rapport à la quantité molaire d'agent amorceur. Cette quantité peut aussi être égale ou inférieure à la quantité molaire d'agent amorceur. De préférence, le ligand est introduit dans une proportion molaire vis-à-vis de l'amorceur allant de 0,3 jusqu'à 15 environ.

Dans le procédé suivant l'invention, les polymérisations des étapes (1) et (2) s'effectuent de préférence en l'absence d'humidité et d'oxygène, et en présence d'au moins un solvant choisi, de préférence, parmi les solvants aromatiques, tels que le benzène et le toluène, ou bien le tétrahydrofuranne, le diglyme, le tétraglyme, l'orthoterphényle, la décaline, la tétraline ou le diméthylformamide.

Quant à la température de polymérisation ou de copolymérisation, elle peut varier entre environ -78°C et +20°C.

Par ailleurs, les copolymères multiséquencés selon l'invention ou préparés par les procédés selon l'invention peuvent être hydrolysés à une température allant de 70° à 170°C environ, sous une pression allant de 1 à 15 bars et en présence de 0,5 à 10% environ en poids, par rapport au copolymère, d'un catalyseur acide tel que l'acide paratoluène sulfonique, l'acide méthane toluène sulfonique ou l'acide chlorhydrique, dans un solvant polaire tel que le dioxanne. Après hydrolyse, les copolymères triséquencés comportant des séquences d'acide acrylique et/ou méthacrylique peuvent être précipités dans l'heptane, filtrés, lavés pour éliminer toute trace de catalyseur et finalement séchés. Ils peuvent aussi être ultérieurement neutralisés au moyen de potasse méthanolique ou encore de tétraméthylammonium hydroxyde en solution dans un mélange de toluène et de méthanol afin de former les ionomères triséquencés correspondants.

Lorsque les copolymères triséquencés selon l'invention ou préparés par les procédés selon l'invention comportent une séquence dérivée d'un acrylate d'alkyle tertiaire ou secondaire, cette séquence peut également être transestérifiée de manière connue en une séquence d'un acrylate d'alkyle primaire.

Les exemples suivants sont donnés à titre illustratif.

Dans tous ces exemples, la chromatographie d'exclusion a été effectuée en utilisant un appareil WATERS GPC 501 équipé de deux colonnes linéaires, avec le tétrahydrofuranne comme éluant à un débit de 1 ml/min. Les masses moléculaires moyennes en nombre ont été déterminées au moyen d'un osmomètre à membrane HP 502.

### EXEMPLE 1

Dans un ballon préalablement séché et sous atmosphère d'azote, on introduit 100 ml de tétrahydrofuranne préséché et, sous agitation, 10⁻⁴ mole de sec-butyllithium. On porte le mélange à la température de -78°C au moyen d'un mélange d'acétone et de carboglace, puis on ajoute une solution de 2 g de N-cyclohexylmaléimide dans le toluène. Les solvants et le monomère sont purifiés par les techniques habituelles de la polymérisation anionique ; en particulier, le N-cyclohexylmaléimide est traité successivement par l'hydrure de calcium et le triéthylaluminium.

On obtient ainsi, avec un rendement de 100% un poly(N-cyclohexylmaléimide) possédant les caractéristiques suivantes :
Mn = masse moléculaire moyenne en nombre (en milliers)
Mw/Mn = polydispersité des masses moléculaires
Tg = température de transition vitreuse (en degrés Celsius).

Les valeurs de ces propriétés sont rassemblées dans le Tableau I ci-après.

### EXEMPLE 2

On reproduit la procédure expérimentale de l'Exemple 1 en remplaçant le sec-butyllithium par le diphénylméthylpotassium. Le rendement de la polymérisation et les caractéristiques du polymère obtenu figurent au Tableau I ci-après.

### EXEMPLE 3

On reproduit la procédure expérimentale de l'Exemple 1 en remplaçant le N-cyclohexylmaléimide par le N-isopropylmaléimide. Le rendement de polymérisation ainsi que les caractéristiques du polymère obtenu figurent au Tableau I ci-après.

### EXEMPLE 4

On reproduit la procédure expérimentale de l'Exemple 3 en remplaçant la sec-butyllithium par le tert.-butanolate de sodium. Le rendement de polymérisation ainsi que les caractéristiques du polymère obtenu figurent au tableau I ci-après.

**TABLEAU I**

| Exemple | 1 | 2 | 3 | 4 |
|---|---|---|---|---|
| rendement | 100 | 100 | 100 | 85 |
| Mn | 32 | 24 | 20 | 80 |
| Mw/Mn | 2,1 | 2,3 | 2,0 | 1,7 |
| Tg | 280 | 284 | n.d. | 244 |

| | | | | |
|---|---|---|---|---|
| n.d. : non déterminé. | | | | |

### EXEMPLE 5

En utilisant la technique expérimentale de l'Exemple 1, et en introduisant successivement l'acrylate de tertiobutyle puis le N-cyclohexylmaléimide, on effectue à -78°C la copolymérisation séquencée de ces deux monomères (les durées de chaque étape étant successivement de 15 et 120 minutes) dans les conditions suivantes :
- alphaméthylstyryllithium :: 0,43.10⁻³ mole
- chlorure de lithium :: 0,43.10⁻² mole
- acrylate de tertiobutyle :: 4,4 g
- N-cyclohexylmaléimide :: 2,0 g
- tétrahydrofuranne :: 50 ml

On obtient avec un rendement de 100% un copolymère biséquencé possédant les caractéristiques suivantes :
- Mn (acrylate) =: 10 600
- Mn (maléimide) =: 3 900
- Mw/Mn (copolymère total) =: 1,14.

### EXEMPLE 6

En utilisant la technique expérimentale de l'Exemple 1 et en introduisant successivement le méthacrylate de méthyle puis la N-cyclohexylmaléimide, on effectue à-78°C la copolymérisation séquencée de ces deux monomères (les durées de chaque étape étant successivement de 15 minutes et 2 heures) dans les conditions suivantes:
- diphénylméthyllithium :: 0,2.10⁻³ mole
- méthacrylate de méthyle :: 0,9 g
- N-cyclohexylmaléimide :: 4 g
- tétrahydrofuranne :: 100 ml

On obtient, avec un rendement de 40%, un copolymère biséquencé possédant les caractéristiques suivantes :
- Mn (méthacrylate) =: 6100
- Mn (maléimide) =: 2300
- Mw/Mn (copolymère total) =: 1,35

### EXEMPLE 7

On reproduit la procédure expérimentale de l'Exemple 6 tout en modifiant les proportions des ingrédients comme suit :
- diphénylméthylsodium =: 0,25.10⁻³ mole
- méthacrylate de méthyle =: 5 g
- N-cyclohexylmaléimide =: 5 g
- chlorure de lithium =: 0,25.10⁻² mole
- tétrahydrofuranne =: 100 ml
- Mn (méthacrylate) =: 18 300
- Mn (maléimide) =: 7 700
- Mw/Mn (copolymère total) =: 1,10.

### EXEMPLE 8 (comparatif)

On polymérise 1 g de N-cyclohexylmaléimide selon la procédure expérimentale de l'Exemple 1 en remplaçant le sec-butyllithium par 0,27.10⁻³ mole de cumylpotassium. Le polymère obtenu dans ces conditions avec un rendement de 98% possède une masse moléculaire moyenne en nombre égale à 6000 et une polydispersité égale à 1,8.

### EXEMPLE 9 (comparatif)

On polymérise 4 g de N-cyclohexylmaléimide selon la procédure expérimentale de l'Exemple 1 en remplaçant le sec-butyllithium par 0,85.10⁻³ mole de tert.-butyllithium. Le polymère obtenu dans ces conditions avec un rendement de 100% possède une masse moléculaire moyenne en nombre égale à 3900 et une polydispersité égale à 1,8.

## Revendications (Revendications pour l'(les) Etat(s) contractant(s) suivant(s): AT, BE, CH, DE, DK, FR, GB, GR, IT, LI, LU, NL, SE)

1. Procédé de polymérisation anionique d'un maléimide N-substitué dans un solvant et en présence d'au moins un amorceur organométallique de métal alcalin, caractérisé par le fait que, comme amorceur de polymérisation, on utilise un composé choisi parmi :
le sec.-butyllithium,
le tert.-butanolate de sodium,
le diphénylméthylpotassium,
le naphtalène lithium ; et
la naphtalène sodium.

2. Procédé de préparation de polymère à base de maléimide N-substitué possédant une distribution étroite des masses moléculaires par polymérisation anionique dudit maléimide dans un solvant et en présence d'un système initiateur constitué d'au moins un amorceur organométallique de métal alcalin et d'au moins un composé choisi parmi les sels minéraux et les sels organiques de métaux alcalins ou alcalino-terreux.

3. Procédé selon la revendication 1, caractérisé par le fait que la polymérisation est effectuée en présence d'au moins un composé choisi parmi les sels minéraux et les sels organiques de métaux alcalins et alcalino-terreux.

4. Séquence polymère à base de maléimide N-substitué possédant un poids moléculaire moyen compris entre 12 000 et 100 000.

5. Séquence polymère à base de maléimide N-substitué dont la polydispersité des poids moléculaires est comprise entre 1,1 et 1,5.

6. Séquence polymère selon la revendication 4, caractérisée par le fait que la polydispersité des poids moléculaire est comprise entre 1,1 et 1,5.

7. Copolymère multiséquencé dans lequel au moins une séquence polymère à base de maléimide N-substitué, conforme à l'une des revendications 4 à 6, est associée à au moins une séquence polymère à base de monomère acrylique ou méthacrylique, à l'exclusion des copolymères triséquencés ayant un poids moléculaire moyen en nombre allant de 3000 à 300 000 et une polydispersité des poids moléculaires allant de 1,05 à 2,0, et ayant au moins une séquence extrême à base de maléimide N-substitué.

8. Copolymère multiséquencé selon la revendication 7, caractérisé par le fait que le poids moléculaire moyen de la séquence à base de monomère acrylique ou méthacrylique est compris entre 2000 et 100 000.

9. Procédé de fabrication d'un copolymère biséquencé dans lequel une séquence polymère à base de maléimide N-substitué est associée à une séquence polymère à base de monomère acrylique ou méthacrylique ou d'un copolymère triséquencé dont la séquence centrale à base de maléimide N-substitué est associée à deux séquences extrêmes à base de monomère acrylique ou méthacrylique, consistant à :
(1) conduire la polymérisation anionique d'au moins un monomère acrylique ou méthacrylique à l'aide d'un amorceur monofonctionnel et, le cas échéant, en présence d'au moins un composé choisi parmi les sels minéraux et les sels organiques de métaux alcalins ou alcalino-terreux et les complexants macrocycliques non azotés, de manière à obtenir un chaînon vivant de la séquence polymère à base de monomère acrylique ou méthacrylique ; puis
(2) faire réagir ledit chaînon vivant ainsi obtenu avec au moins un maléimide N-substitué de manière à obtenir un copolymère biséquencé vivant susceptible de réagir à son tour avec au moins un monomère acrylique ou méthacrylique pour former un copolymère triséquencé,
l'étape (2) étant conduite en présence d'un amorceur tel que défini à la revendication 1 ou d'un système initiateur tel que défini à la revendication 2.

10. Procédé de fabrication d'un copolymère triséquencé dans lequel une séquence centrale à base de monomère acrylique ou méthacrylique est associée à deux séquences extrêmes à base de maléimide N-substitué consistant à :
(1) conduire la polymérisation anionique d'au moins un monomère acrylique ou méthacrylique à l'aide d'un amorceur bifonctionnel et, le cas échéant, en présence d'au moins un composé choisi parmi les sels minéraux et les sels organiques de métaux alcalins ou alcalino-terreux et les complexants macrocycliques non azotés, de manière à obtenir un dianion de la séquence polymère à base de monomère acrylique ou méthacrylique ; puis
(2) faire réagir ledit dianion avec au moins un maléimide N-substitué,
l'étape (2) étant conduite en présence d'un amorceur tel que défini à la revendication 1 ou d'un système initiateur tel que défini à la revendication 2.

## Revendications (Revendications pour l'(les) Etat(s) contractant(s) suivant(s): ES)

1. Procédé de polymérisation anionique d'un maléimide N-substitué dans un solvant et en présence d'au moins un amorceur organométallique de métal alcalin, caractérisé par le fait que, comme amorceur de polymérisation, on utilise un composé choisi parmi :
le sec.-butyllithium,
le tert.-butanolate de sodium,
le diphénylméthylpotassium,
le naphtalène lithium ; et
la naphtalène sodium.

2. Procédé de préparation de polymère à base de maléimide N-substitué possédant une distribution étroite des masses moléculaires par polymérisation anionique dudit maléimide dans un solvant et en présence d'un système initiateur constitué d'au moins un amorceur organométallique de métal alcalin et d'au moins un composé choisi parmi les sels minéraux et les sels organiques de métaux alcalins ou alcalino-terreux.

3. Procédé selon la revendication 1, caractérisé par le fait que la polymérisation est effectuée en présence d'au moins un composé choisi parmi les sels minéraux et les sels organiques de métaux alcalins et alcalino-terreux.

4. Procédé selon la revendication 1, caractérisé par le fait qu'il conduit à des séquences polymères à base de maléimide N-substitué possédant un poids moléculaire moyen compris entre 12 000 et 100 000.

5. Procédé selon la revendication 2, caractérisé par le fait qu'il conduit à des séquences polymères à base de maléimide N-substitué dont la polydispersité des poids moléculaires est comprise entre 1,1 et 1,5.

6. Procédé selon la revendication 4, caractérisé par le fait qu'il conduit à des séquences polymères dont la polydispersité des poids moléculaire est comprise entre 1,1 et 1,5.

7. Procédé de fabrication d'un copolymère biséquencé dans lequel une séquence polymère à base de maléimide N-substitué est associée à une séquence polymère à base de monomère acrylique ou méthacrylique ou d'un copolymère triséquencé dont la séquence centrale à base de maléimide N-substitué est associée à deux séquences extrêmes à base de monomère acrylique ou méthacrylique, consistant à :
(1) conduire la polymérisation anionique d'au moins un monomère acrylique ou méthacrylique à l'aide d'un amorceur monofonctionnel et, le cas échéant, en présence d'au moins un composé choisi parmi les sels minéraux et les sels organiques de métaux alcalins ou alcalino-terreux et les complexants macrocycliques non azotés, de manière à obtenir un chaînon vivant de la séquence polymère à base de monomère acrylique ou méthacrylique ; puis
(2) faire réagir ledit chaînon vivant ainsi obtenu avec au moins un maléimide N-substitué de manière à obtenir un copolymère biséquencé vivant susceptible de réagir à son tour avec au moins un monomère acrylique ou méthacrylique pour former un copolymère triséquencé,
l'étape (2) étant conduite en présence d'un amorceur tel que défini à la revendication 1 ou d'un système initiateur tel que défini à la revendication 2.

8. Procédé de fabrication d'un copolymère triséquencé dans lequel une séquence centrale à base de monomère acrylique ou méthacrylique est associée à deux séquences extrêmes à base de maléimide N-substitué consistant à :
(1) conduire la polymérisation anionique d'au moins un monomère acrylique ou méthacrylique à l'aide d'un amorceur bifonctionnel et, le cas échéant, en présence d'au moins un composé choisi parmi les sels minéraux et les sels organiques de métaux alcalins ou alcalino-terreux et les complexants macrocycliques non azotés, de manière à obtenir un dianion de la séquence polymère à base de monomère acrylique ou méthacrylique ; puis
(2) faire réagir ledit dianion avec au moins un maléimide N-substitué,
l'étape (2) étant conduite en présence d'un amorceur tel que défini à la revendication 1 ou d'un système initiateur tel que défini à la revendication 2.

9. Procédé selon l'une des revendications 7 et 8, caractérisé par le fait que la séquence polymère à base de maléimide N-substitué possède un poids moléculaire moyen compris entre 12 000 et 100 000 et/ou une polydispersité des poids moléculaires comprise entre 1,1 et 1,5.

10. Procédé selon l'une des revendications 7 à 9, caractérisé par le fait que le poids moléculaire moyen de la séquence à base de monomère acrylique ou méthacrylique est compris entre 2 000 et 100 000.

## Patentansprüche (Patentansprüche für folgende(n) Vertragsstaat(en): AT, BE, CH, DE, DK, FR, GB, GR, IT, LI, LU, NL, SE)

1. Verfahren zur anionischen Polymerisation eines N-substituierten Maleinimids in einem Lösemittel und in Gegenwart mindestens eines organometallischen Starters eines Alkalimetalls, dadurch gekennzeichnet, daß man als Polymerisationsstarter eine Verbindung verwendet, die ausgewählt ist aus:
sek.-Butyllithium,
Natrium-tert.-butanolat,
Diphenylmethylkalium,
Naphthalinlithium; und
Naphthalinnatrium.

2. Verfahren zur Herstellung eines Polymers auf Basis eines N-substituierten Maleinimids mit einer engen Molekularmassenverteilung mittels anionischer Polymerisation dieses Maleinimids in einem Lösemittel und in Gegenwart eines Startersystems, das aus mindestens einem organometallischen Starter eines Alkalimetalls und mindestens einer Verbindung besteht, die ausgewählt ist aus mineralischen Salzen oder organischen Salzen von Alkalimetallen oder Erdalkalimetallen.

3. Verfahren nach Anspruch 1, dadurch gekennzeichnet, daß die Polymerisation in Gegenwart mindestens einer Verbindung durchgeführt wird, die ausgewählt ist aus mineralischen Salzen und organischen Salzen von Alkalimetallen und Erdalkalimetallen.

4. Polymerblock auf Basis eines N-substituierten Maleinimids mit einer mittleren Molekularmasse zwischen 12.000 und 100.000.

5. Polymerblock auf Basis eines N-substituierten Maleinimids, dessen Polydispersität der Molekulargewichte zwischen 1,1 und 1,5 liegt.

6. Polymerblock nach Anspruch 4, dadurch gekennzeichnet, daß die Polydispersität der Molekulargewichte zwischen 1,1 und 1,5 liegt.

7. Multiblockcopolymeres, bei dem mindestens ein Polymerblock auf Basis eines N-substituierten Maleinimids gemäß einem der Ansprüche 4 bis 6 mit mindestens einem Polymerblock auf Basis eines Acryl- oder Methacrylmonomeren verbunden ist, ausgenommen Dreiblockcopolymere mit einem zahlenmittleren Molekulargewicht von 3.000 bis 300.000, einer Polydispersität der Molekulargewichte von 1,05 bis 2,0 und mit mindestens einem äußeren Block auf Basis eines N-substituierten Maleinimids.

8. Multiblockcopolymeres nach Anspruch 7, dadurch gekennzeichnet, daß das mittlere Molekulargewicht des Blocks auf Basis eines Acryl- oder Methacrylmonomeren zwischen 2.000 und 100.000 beträgt.

9. Verfahren zur Herstellung eines Zweiblockcopolymeren, bei dem ein Polymerblock auf Basis eines N-substituierten Maleinimids verbunden ist mit einem Polymerblock auf Basis eines Acryl- oder Methacrylmonomeren oder eines Dreiblockcopolymeren, dessen zentraler Block auf Basis eines N-substituierten Maleinimids verbunden ist mit zwei äußeren Blöcken auf Basis eines Acryl- oder Methacrylmonomeren, wobei das Verfahren aus den folgenden Schritten besteht:
(1) Die anionische Polymerisation mindestens eines Acryl- oder Methacrylmonomeren wird mit Hilfe eines monofunktionellen Starters und gegebenenfalls in Gegenwart mindestens einer Verbindung durchgeführt, die ausgewählt ist aus mineralischen Salzen oder organischen Salzen von Alkalimetallen oder Erdalkalimetallen und nicht stickstoffhaltigen makrocyclischen Komplexbildnern, so daß man eine lebende Kette des Polymerblocks auf Basis eines Acryl- oder Methacrylmonomeren erhält;
(2) dann läßt man die so erhaltene lebende Kette mit mindestens einem N-substituierten Maleinimid reagieren, so daß man ein lebendes Zweiblockcopolymer erhält, das seinerseits mit mindestens einem Acryl- oder Methacrylmonomeren reagieren kann, um ein Dreiblockcopolymer zu bilden, wobei Verfahrensschritt (2) in Gegenwart eines Starters, wie in Anspruch 1 definiert, oder eines Startersystems, wie in Anspruch 2 definiert, durchgeführt wird.

10. Verfahren zur Herstellung eines Dreiblockcopolymeren, bei dem ein zentraler Block auf Basis eines Acryl- oder Methacrylmonomeren mit zwei äußeren Blöcken auf Basis eines N-substituierten Maleinimids verbunden ist, wobei das Verfahren aus den folgenden Verfahrensschritten besteht:
(1) Man führt die anionische Polymerisation mindestens eines Acryl- oder Methacrylmonomeren mit Hilfe einer bifunktionellen Starters und gegebenenfalls in Gegenwart mindestens einer Verbindung durch, die ausgewählt ist aus mineralischen Salzen oder organischen Salzen von Alkalimetallen oder Erdalkalimetallen und nicht stickstoffhaltigen makrocyclischen Komplexbildnern, so daß man ein Dianion des Polymerblocks auf Basis eines Acryl- oder Methacrylmonomeren erhält;
(2) dann läßt man dieses Dianion mit mindestens einem N-substituierten Maleinimid reagieren,
wobei Schritt (2) in Gegenwart eines Starters, wie in Anspruch 1 definiert, oder eines Startersystems, wie in Anspruch 2 definiert, durchgeführt wird.

## Patentansprüche (Patentansprüche für folgende(n) Vertragsstaat(en): ES)

1. Verfahren zur anionischen Polymerisation eines N-substituierten Maleinimids in einem Lösemittel und in Gegenwart mindestens eines organometallischen Starters eines Alkalimetalls, dadurch gekennzeichnet, daß man als Polymerisationsstarter eine Verbindung verwendet, die ausgewählt ist aus:
sek.-Butyllithium,
Natrium-tert.-butanolat,
Diphenylmethylkalium,
Naphthalinlithium; und
Naphthalinnatrium.

2. Verfahren zur Herstellung eines Polymers auf Basis eines N-substituierten Maleinimids mit einer engen Molekularmassenverteilung mittels anionischer Polymerisation dieses Maleinimids in einem Lösemittel und in Gegenwart eines Startersystems, das aus mindestens einem organometallischen Starter eines Alkalimetalls und mindestens einer Verbindung besteht, die ausgewählt ist aus mineralischen Salzen oder organischen Salzen von Alkalimetallen oder Erdalkalimetallen.

3. Verfahren nach Anspruch 1, dadurch gekennzeichnet, daß die Polymerisation in Gegenwart mindestens einer Verbindung durchgeführt wird, die ausgewählt ist aus mineralischen Salzen und organischen Salzen von Alkalimetallen und Erdalkalimetallen.

4. Verfahren nach Anspruch 1, dadurch gekennzeichnet, daß es zu Polymerblöcken auf Basis eines N-substituierten Maleinimids mit einem mittleren Molekulargewicht zwischen 12.000 und 100.000 führt.

5. Verfahren nach Anspruch 2, dadurch gekennzeichnet, daß es zu Polymerblöcken auf Basis eines N-substituierten Maleinimids führt, dessen Polydispersität der Molekulargewichte zwischen 1,1 und 1,5 liegt.

6. Verfahren nach Anspruch 4, dadurch gekennzeichnet, daß es zu Polymerblöcken führt, deren Polydispersität der Molekulargewichte zwischen 1,1 und 1,5 liegt.

7. Verfahren zur Herstellung eines Zweiblockcopolymeren, bei dem ein Polymerblock auf Basis eines N-substituierten Maleinimids verbunden ist mit einem Polymerblock auf Basis eines Acryl- oder Methacrylmonomeren oder eines Dreiblockcopolymeren, dessen zentraler Block auf Basis eines N-substituierten Maleinimids verbunden ist mit zwei äußeren Blöcken auf Basis eines Acryl- oder Methacrylmonomeren, wobei das Verfahren aus den folgenden Schritten besteht:
(1) Die anionische Polymerisation mindestens eines Acryl- oder Methacrylmonomeren wird mit Hilfe eines monofunktionellen Starters und gegebenenfalls in Gegenwart mindestens einer Verbindung durchgeführt, die ausgewählt ist aus mineralischen Salzen oder organischen Salzen von Alkalimetallen oder Erdalkalimetallen und nicht stickstoffhaltigen makrocyclischen Komplexbildnern, so daß man eine lebende Kette eines Polymerblocks auf Basis eines Acryl- oder Methacrylmonomeren erhält;
(2) dann läßt man die so erhaltene lebende Kette mit mindestens einem N-substituierten Maleinimid reagieren, so daß man ein lebendes Zweiblockcopolymer erhält, das seinerseits mit mindestens einem Acryl- oder Methacrylmonomeren reagieren kann, um ein Dreiblockcopolymer zu bilden, wobei Verfahrensschritt (2) in Gegenwart eines Starters, wie in Anspruch 1 definiert, oder eines Startersystems, wie in Anspruch 2 definiert, durchgeführt wird.

8. Verfahren zur Herstellung eines Dreiblockcopolymeren, bei dem ein zentraler Block auf Basis eines Acryl- oder Methacrylmonomeren mit zwei äußeren Blöcken auf Basis eines N-substituierten Maleinimids verbunden ist, wobei das Verfahren aus den folgenden Verfahrensschritten besteht:
(1) Man führt die anionische Polymerisation mindestens eines Acryl- oder Methacrylmonomeren mit Hilfe einer bifunktionellen Starters und gegebenenfalls in Gegenwart mindestens einer Verbindung durch, die ausgewählt ist aus mineralischen Salzen oder organischen Salzen von Alkalimetallen oder Erdalkalimetallen und nicht stickstoffhaltigen makrocyclischen Komplexbildnern, so daß man ein Dianion des Polymerblocks auf Basis eines Acryl- oder Methacrylmonomeren erhält;
(2) dann läßt man dieses Dianion mit mindestens einem N-substituierten Maleinimid reagieren,
wobei Schritt (2) in Gegenwart eines Starters, wie in Anspruch 1 definiert, oder eines Startersystems, wie in Anspruch 2 definiert, durchgeführt wird.

9. Verfahren nach einem der Ansprüche 7 und 8, dadurch gekennzeichnet, daß der Polymerblock auf Basis eines N-substituierten Maleinimids ein mittleres Molekulargewicht zwischen 12.000 und 100.000 und/oder eine Polydispersität der Molekulargewichte zwischen 1,1 und 1,5 aufweist.

10. Verfahren nach einem der Ansprüche 7 bis 9, dadurch gekennzeichnet, daß das mittlere Molekulargewicht des Blocks auf Basis eines Acryl- oder Methacrylmonomeren zwischen 2.000 und 100.000 liegt.

## Claims (Claims for the following Contracting State(s): AT, BE, CH, DE, DK, FR, GB, GR, IT, LI, LU, NL, SE)

1. Process for anionic polymerization of an N-substituted maleimide in a solvent and in the presence of at least one alkali metal organometallic initiator, characterized in that the polymerization initiator used is a compound chosen from sec-butyllithium, sodium tert-butanolate, diphenylmethylpotassium, naphthalenelithium and naphthalenesodium.

2. Process for the preparation of polymer, based on N-substituted maleimide, having a narrow molecular weight distribution by anionic polymerization of the said maleimide in a solvent and in the presence of an initiator system consisting of at least one alkali metal organometallic initiator and at least one compound chosen from the inorganic salts and the organic salts of alkali metals or alkaline earth metals.

3. Process according to Claim 1, characterized in that the polymerization is carried out in the presence of at least one compound chosen from the inorganic salts and the organic salts of alkali metals and alkaline earth metals.

4. Polymer block based on N-substituted maleimide having an average molecular weight between 12,000 and 100,000.

5. Polymer block based on N-substituted maleimide for which the polydispersity of the molecular weights is between 1.1 and 1.5.

6. Polymer block according to Claim 4, characterized in that the polydispersity of the molecular weights is between 1.1 and 1.5.

7. Multi-block copolymer in which at least one polymer block based on N-substituted maleimide, according to one of Claims 4 to 6, is combined with at least one polymer block based on acrylic or methacrylic monomer, with the exception of tri-block copolymers having a number-average molecular weight ranging from 3,000 to 300,000 and a polydispersity of the molecular weights ranging from 1.05 to 2.0, and having at least one end block based on N-substituted maleimide.

8. Multi-block copolymer according to Claim 7, characterized in that the average molecular weight of the block based on acrylic or methacrylic monomer is between 2,000 and 100,000.

9. Process for the production of a bi-block copolymer in which a polymer block based on N-substituted maleimide is combined with a polymer block based on acrylic or methacrylic monomer, or of a tri-block copolymer in which the central block based on N-substituted maleimide is combined with two end blocks based on acrylic or methacrylic monomer, consisting in :
(1) carrying out the anionic polymerization of at least one acrylic or methacrylic monomer with the aid of a monofunctional initiator and, if necessary, in the presence of at least one compound chosen from the inorganic salts and the organic salts of alkali metals or alkaline earth metals and the non-nitrogenous macrocyclic complexing agents, so as to obtain an active member of the polymer block based on acrylic or methacrylic monomer ; then
(2) reacting the said active member thus obtained with at least one N-substituted maleimide so as to obtain an active bi-block copolymer capable of reacting, in its turn, with at least one acrylic or methacrylic monomer to form a tri-block copolymer,
the step (2) being carried out in the presence of an initiator as defined in Claim 1 or of an initiator system as defined in Claim 2.

10. Process for the production of a tri-block copolymer in which a central block based on acrylic or methacrylic monomer is combined with two end blocks based on N-substituted maleimide, consisting in :
(1) carrying out the anionic polymerization of at least one acrylic or methacrylic monomer with the aid of a bifunctional initiator and, if necessary, in the presence of at least one compound chosen from the inorganic salts and the organic salts of alkali metals or alkaline earth metals and non-nitrogenous macrocyclic complexing agents, so as to obtain a dianion of the polymer block based on acrylic or methacrylic monomer, and then
(2) reacting the said dianion with at least one N-substituted maleimide,
the step (2) being carried out in the presence of an initiator as defined in Claim 1 or of an initiator system as defined in Claim 2.

## Claims (Claims for the following Contracting State(s): ES)

1. Process for anionic polymerization of an N-substituted maleimide in a solvent and in the presence of at least one alkali metal organometallic initiator, characterized in that the polymerization initiator used is a compound chosen from sec-butyllithium, sodium tert-butanolate, diphenylmethylpotassium, naphthalenelithium and naphthalenesodium.

2. Process for the preparation of polymer, based on N-substituted maleimide, having a narrow molecular weight distribution by anionic polymerization of the said maleimide in a solvent and in the presence of an initiator system consisting of at least one alkali metal organometallic initiator and at least one compound chosen from the inorganic salts and the organic salts of alkali metals or alkaline earth metals.

3. Process according to Claim 1, characterized in that the polymerization is carried out in the presence of at least one compound chosen from the inorganic salts and the organic salts of alkali metals and alkaline earth metals.

4. Process according to Claim 1, characterized in that it results in polymer blocks based on N-substituted maleimide having an average molecular weight between 12,000 and 100,000.

5. Process according to Claim 2, characterized in that it results in polymer blocks based on N-substituted maleimide for which the polydispersity of the molecular weights is between 1.1 and 1.5.

6. Process according to Claim 4, characterized in that it results in polymer blocks the polydispersity of the molecular weights of which is between 1.1 and 1.5.

7. Process for the production of a bi-block copolymer in which a polymer block based on N-substituted maleimide is combined with a polymer block based on acrylic or methacrylic monomer, or of a tri-block copolymer in which the central block based on N-substituted maleimide is combined with two end blocks based on acrylic or methacrylic monomer, consisting in :
(1) carrying out the anionic polymerization of at least one acrylic or methacrylic monomer with the aid of a monofunctional initiator and, if necessary, in the presence of at least one compound chosen from the inorganic salts and the organic salts of alkali metals or alkaline earth metals and the non-nitrogenous macrocyclic complexing agents, so as to obtain an active member of the polymer block based on acrylic or methacrylic monomer ; then
(2) reacting the said active member thus obtained with at least one N-substituted maleimide so as to obtain an active bi-block copolymer capable of reacting, in its turn, with at least one acrylic or methacrylic monomer to form a tri-block copolymer,
the step (2) being carried out in the presence of an initiator as defined in Claim 1 or of an initiator system as defined in Claim 2.

8. Process for the production of a tri-block copolymer in which a central block based on acrylic or methacrylic monomer is combined with two end blocks based on N-substituted maleimide, consisting in :
(1) carrying out the anionic polymerization of at least one acrylic or methacrylic monomer with the aid of a bifunctional initiator and, if necessary, in the presence of at least one compound chosen from the inorganic salts and the organic salts of alkali metals or alkaline earth metals and non-nitrogenous macrocyclic complexing agents, so as to obtain a dianion of the polymer block based on acrylic or methacrylic monomer, and then
(2) reacting the said dianion with at least one N-substituted maleimide,
the step (2) being carried out in the presence of an initiator as defined in Claim 1 or of an initiator system as defined in Claim 2.

9. Process according to one of Claims 7 and 8, characterized in that the polymer block based on N-substituted maleimide has an average molecular weight between 12,000 and 100,000 and/or a polydispersity of the molecular weights between 1.1 and 1.5.

10. Process according to one of Claims 7 to 9, characterized in that the average molecular weight of the block based on acrylic or methacrylic monomer is between 2000 and 100 000.
